# EUROPÄISCHE PATENTANMELDUNG

(11) **EP 4 610 020 A1**
(43) Veröffentlichungstag der Anmeldung: **03.09.2025**
(21) Anmeldenummer: 25160508.5
(22) Anmeldetag: 27.02.2025
(51) Int. Cl.: B29C 49/42, B29C 49/64, B29C 49/68, B29C 49/06, B29K 67/00, B29L 31/00

(54) **VORRICHTUNG UND VERFAHREN ZUM BEHANDELN VON VORFORMLINGEN**

(30) Priorität: 29.02.2024 DE 102024105725
(71) Anmelder: KHS GmbH, 44143 Dortmund (DE)
(72) Erfinder: Gerhards, Martin, 44143 Dortmund (DE); Baumgarte, Rolf, 44143 Dortmund (DE); Linke, Michael, 44143 Dortmund (DE); Wenig, Marcus, 44143 Dortmund (DE); Klöpper, Gerhard, 44143 Dortmund (DE)
(74) Vertreter: Andrejewski - Honke Patent- und Rechtsanwälte Partnerschaft mbB

(57) **Zusammenfassung**

Die Erfindung betrifft eine Vorrichtung (1) zur Behandlung von Vorformlingen (2) umfassend eine Heizanordnung (3) mit einer Transportvorrichtung (6) zum Transportieren der Vorformlinge (2) von einem Eingabebereich (A) zu einem Ausgabebereich (B) entlang zumindest eines eine Heizstrecke (7) aufweisenden Transportwegs (T). Die Transportvorrichtung (6) ist mit einer Vielzahl von in einer Transportrichtung (t) umlaufend bewegbaren Transporteinheiten (8) ausgebildet, welche jeweils eine um eine Rotationsachse (r) drehbare Halterung (8a) zur Aufnahme jeweils eines Vorformlings (2) und einen in einer Funktionsebene (F) zu der Rotationssachse (r) exzentrisch angeordneten und mit der Halterung (8a) drehgekoppelten Mitnehmer (8b) aufweisen. Die Vorrichtung (1) umfasst ferner zumindest eine entlang des Transportwegs (T) ausgebildete Zwangsführungsvorrichtung (9), welche dazu eingerichtet ist, mit den Transporteinheiten (8) zu wechselwirken und dadurch jeweils die Drehstellung der Halterung (8a) festzulegen. Die Zwangsführungsvorrichtung (9) weist entlang zumindest eines Abschnitts der Heizstrecke (7) eine in der Funktionsebene (F) angeordnete und mit dem Mitnehmer (8b) wechselwirkende Führung (10) auf. Erfindungsgemäß ist die Führung (10) zumindest abschnittsweise verstellbar und/oder verlagerbar ausgebildet.

## Beschreibung

Die Erfindung betrifft eine Vorrichtung zum Behandeln von Vorformlingen umfassend eine Heizanordnung für die Vorformlinge mit einer Transportvorrichtung zum Transportieren der Vorformlinge von einem Eingabebereich zu einem Ausgabebereich entlang zumindest eines zumindest eine Heizstrecke aufweisenden Transportweges, mit einer Vielzahl von in einer Transportrichtung umlaufend bewegbaren Transporteinheiten, welche jeweils eine um eine Rotationsachse drehbare Halterung zur Aufnahme jeweils eines Vorformlings und in einer Funktionsebene einen zu der Rotationsachse exzentrisch angeordneten und mit der Halterung drehgekoppelten Mitnehmer aufweisen. Die Transportvorrichtung umfasst ferner zumindest eine entlang des Transportwegs ausgebildete Zwangsführungsvorrichtung, welche dazu eingerichtet ist mit den Transporteinheiten zu wechselwirken und dadurch jeweils die Drehstellung der Halterung festzulegen. Die Zwangsführungsvorrichtung weist entlang zumindest eines Abschnitts der Heizstrecke zumindest eine in der Funktionsebene angeordnete und mit dem Mitnehmer wechselwirkende Führung auf.

Die Erfindung betrifft das technische Gebiet der Behandlung von Vorformlingen. Dabei handelt es sich um vorgeformte Hohlkörper aus Kunststoff, welche in einem anschließenden Umformungsschritt in ihre spätere bestimmungsgemäße Form umgewandelt werden. Hierzu werden die Vorformlinge zunächst in einer Heizeinrichtung erwärmt, um das Material in einen verformbaren Zustand zu überführen. Insbesondere handelt es sich bei den Vorformlingen um ein Halbzeug aus spritzgussgeformtem Kunststoff, insbesondere Polyethylenterephthalat (PET).

Die Vorformlinge weisen üblicherweise einen durch eine Wandung umschlossenen Innenraum auf, welcher durch eine in einem Halsbereich angeordnete Öffnung zugänglich ist. Die zumindest partiell erwärmten Vorformlinge werden anschließend in einem Blas- oder Streckblasprozess vorzugsweise zu Kunststoffbehältern umgeformt. Dabei wird zumindest die den Innenraum umschließende Wandung auf eine Umformtemperatur erhitzt, sodass diese anschließend durch Kraftbeaufschlagung in ihre abschließende Form gebracht werden kann.

Bei einem Blasprozess wird der Innenraum des Vorformlings mit einem Überdruck beaufschlagt, indem ein Druckmedium, z. B. Druckluft eingeführt wird. Bei einem Streckblasprozess kann zusätzlich auch eine Umformung durch direkten mechanischen Kontakt - insbesondere durch eine sogenannte Reckstange - erfolgen. Die Außenform des Endprodukts wird zweckmäßigerweise durch eine Kavität definiert, in der der Umformprozess durchgeführt wird.

Einen Sonderfall des Umformprozesses stellt das sogenannte FormFill-Verfahren dar, bei dem während der Umformung gleichzeitig ein Befüllungsprozess mit einem Füllgut stattfindet. Das Füllgut kann dabei gleichzeitig zumindest teilweise die Funktion eines Druckmediums erfüllen.

Die Erfindung geht weiterhin von einer Vorrichtung bzw. einem Verfahren aus, bei der das sogenannte Preferential Heating durchgeführt wird. Dabei wird die - i.d.R. um eine Längsachse rotationssymmetrische - Wandung des Vorformlings mit einem nicht-rotationssymmetrischen Temperaturprofil beaufschlagt. Dies wird dadurch erreicht, dass in der Heizanordnung die Wärmeenergie aus einer bevorzugten Richtung mit größerer Intensität eingebracht wird als aus anderen Richtungen

Dabei wird den Vorformlingen um ihre Längserstreckungsachse ein winkelabhängiges Temperaturprofil aufgeprägt. Dies ist insbesondere dann von Vorteil, wenn aus den Vorformlingen anschließend nicht-runde - also beispielsweise vieleckige oder elliptische bzw. ovale - Kunststoffbehälter hergestellt werden sollen. Durch das anisotrope Temperaturprofil kann während des Umformprozesses das Fließverhalten des Kunststoffmaterials derart beeinflusst werden, dass eine vorteilhafte, insbesondere gleichförmige Wandstärke bei dem späteren Endprodukt erzielt wird..

Auch die Ausrichtung des Halsabschnitts (Neck) des Vorformlings und späteren Behälters im Verhältnis zum nicht-runden Behälterkörper ist von Bedeutung, da dort ein mit einer Vorzugsrichtung ausgebildeter Aufsatz oder Verschluss, wie z. B. ein Sprühkopf, aufgesetzt werden kann. Dieser muss im Verhältnis zum Behälterkörper eine definierte Ausrichtung aufweisen. Infolgedessen ist für optimale Produktqualität eine korrekte Ausrichtung der drei Komponenten Halsabschnitt-Temperaturverteilung-Behälterformung zueinander notwendig.

Während eine gleichförmige Erwärmung des Vorformlings dadurch erreicht werden kann, dass dieser beim Durchlaufen einer Heizstrecke ständig um seine Längsachse rotiert, ist beim Preferential Heating vorgesehen, dass innerhalb einer Heizstrecke keine rotative Bewegung stattfindet, sondern der Vorformling in einer bestimmten (Drehwinkel-)Ausrichtung hindurchgeführt wird. Die entlang des Transportweges angeordneten und auf die die Heizstrecke durchlaufenden Vorformlinge wirksamen Heizeinrichtungen geben an die den Heizeinrichtungen zugewandten Seiten eine größere Energiemenge ab und erwärmen diese infolgedessen stärker.

Beim Transport zwischen dem Durchlaufen der (Preferential Heating)-Heizstrecke und einer späteren Verwendung - z. B. dem Streckblasprozess - kann es zu Positionierungsfehlern hinsichtlich der rotativen Ausrichtung der Vorformlinge kommen. Dies tritt vor allem im Bereich einer Übergabe auf, bei der die erwärmten Vorformlinge aus der Heizanordnung entnommen und ihrer späteren Verwendung - zum Beispiel einer Umformmaschine - weitertransportiert werden.

Bei diesen Fehlern kann es sich um zufällige (statistische) Abweichungen oder systematische Fehler handeln, welche insbesondere aufgrund falsch kalibrierter Werkzeuge, Übergabevorrichtung, Temperaturschwankungen und bei der Auslegung nicht berücksichtigte Effekte herrühren können. Um die Vorteile des Preferential Heating optimal ausnutzen zu können, ist es jedoch notwendig eine exakte Positionierung des mit einem Temperaturprofil beaufschlagten Vorformlings im Weiterverarbeitungsprozess zu erzielen.

Hierzu ist bereits vorgeschlagen worden, im Ausgabebereich die Drehpositionierung der Aufnahme zu verändern, um die erwärmten Vorformlinge in einer vorherbestimmten variablen Drehposition aus der Heizanordnung auszugeben. Derartige Ausgestaltungen sind jedoch technisch aufwendig und störungsanfällig. Auch lässt sich dadurch die Drehstellung nur verhältnismäßig ungenau anpassen.

Vor diesem Hintergrund liegt der Erfindung die Aufgabe zugrunde, die gattungsgemäße Vorrichtungen und das gattungsgemäße Verfahren derart zu verbessern, dass eine präzisere Ausrichtung des Heizprofils mit einfachen Mitteln bewerkstelligt werden kann. Gegenstand der Erfindung und Lösung dieser Aufgabe ist eine Vorrichtung nach Patentanspruch 1 sowie ein Verfahren nach Patentanspruch 11. Bevorzugte Ausgestaltungen sind in den abhängigen Unteransprüchen angegeben.

Ausgehend von der gattungsgemäßen Vorrichtung ist erfindungsgemäß vorgesehen, dass die Führung zumindest abschnittsweise verstellbar und/oder verlagerbar ausgebildet ist. Die Positionierung des Mitnehmers in der Führung bestimmt den Drehwinkel, welche die Aufnahme - und damit der Vorformling - beim Durchlaufen der Heizstrecke einnimmt. Durch eine Verlagerung und/oder Verstellung dieser Führung kann diese Drehpositionierung dauerhaft und für sämtliche die Heizstrecke durchlaufenden Heizeinheiten gleichermaßen beeinflusst werden. Eine zusätzliche Manipulation der Drehstellung im Ausgabebereich kann dadurch entfallen. Durch die erfindungsgemäße verstellbare Ausrichtung der Vorformlinge entlang der Heizstrecke erfolgt eine besonders gleichmäßige und konsistente Orientierung des Heizprofils, welche sich bis in dem Ausgabebereich fortsetzt. Dadurch kann reproduzierbar die bei der Übergabe an nachfolgende Funktionen Temperaturverteilung gesteuert werden.

Gemäß einer bevorzugten Ausgestaltung umfasst die Vorrichtung eine an den Ausgabebereich angeschlossene Umformmaschine. Diese ist zum Umformen der in der Heizeinrichtung erwärmten Vorformlinge zu Behältern. Dabei handelt es sich insbesondere um eine sogenannte Streckblasmaschine, bei der die erwärmten Vorformlinge in eine Außenform eingegeben und anschließend mit einem Innendruck beaufschlagt werden. Zusätzlich wird der erwärmte Vorformling bei einer Streckblasmaschine durch einen Metallstift, eine sogenannte Reckstange in die Länge gezogen.

Alternativ oder zusätzlich kann die Umformmaschine eine sog. FormFill-Anlage sein, welche dazu eingerichtet ist, die Vorformlinge bzw. Behälter während des Umformprozesses gleichzeitig mit einem Füllgut zu befüllen. Dabei kann das Füllgut auch zur Vermittlung des Innendrucks eingesetzt werden.

Bevorzugt weist die Umformmaschine eine Vielzahl von im Querschnitt nicht-runden Außenformen auf. Diese eignen sich besonders bevorzugt für den hier weiterentwickelten Preferential-Heating-Prozess. Durch die erfindungsgemäße Orientierung des Heizprofils lässt sich diese optimal mit der Geometrie der nicht-runden Außenform in Übereinstimmung bringen.

Gemäß einer bevorzugten Ausgestaltung der verstellbaren und/oder verlagerbaren Führung wird sichergestellt, dass das in dem Heizbereich aufgeprägte und durch die Führung in seiner Orientierung einstellbare Heizprofil in einer definierten Orientierung in den Ausgabebereich gelangt, wo der derart erwärmte Vorformling entnommen und einem späteren Produktionsschritt - insbesondere einer Umformmaschine - zugeführt werden kann.

Vorzugsweise erstreckt sich die Zwangsführungsvorrichtung durchgängig von der verstellbaren und/oder verlagerbaren Führung bis zu dem Ausgabebereich. Damit ist die Orientierung (Drehstellung) der Vorformlinge auf dem Transportweg zwischen der Heizstrecke bis zum Ausgabebereich eindeutig festgelegt. Dadurch wird sichergestellt, dass das in dem Heizbereich aufgeprägte und hinsichtlich der Orientierung durch die Verlagerung der Führung verstellbare Temperaturprofil in einer definierten Drehstellung in den Ausgabebereich gelangt. Dies ist bei allen Vorformlingen gleichermaßen wirksam.

Besonders bevorzugt erstreckt sich die Zwangsführungsvorrichtung durchgängig von dem Eingabebereich bis zu dem Ausgabebereich. Dies führt zu einem insgesamt gleichmäßigen und reproduzierbaren Heizprofil bei allen die Heizstrecke und ggf. weitere Heizstrecken durchlaufenden Vorformlingen.

Die Vorrichtung kann neben der Heizstrecke mit der erfindungsgemäßen verstellbaren Zwangsführung auch weitere Heizstrecken in Transportrichtung vor und/oder hinter der Heizstrecke umfassen. An den weiteren Heizstrecken kann gleichermaßen verstellbares und nicht-verstellbares Preferential Heating und/oder eine gleichmäßige Beheizung mit rotierenden Aufnahmen und Vorformlingen erfolgen. Während eine bevorzugte anisotrope Beheizung (Preferential Heating) durch die Führung des Mitnehmers in einer zugeordneten Führungsschiene erfolgen kann, lässt sich eine rotative und gleichmäßige "Standard"-Beheizung darüber realisieren, dass mit der Aufnahme ein Ritzel drehgekoppelt ist, welches - in "rotativen" Heizbereichen - mit einem zugeordneten Zahnprofil in Eingriff steht. Das Zahnprofil kann insbesondere durch an der Transportvorrichtung feststehend angeordneten Zahnstangen und/oder entlang der Transportvorrichtung geführten Zahnriemen bzw. Ketten gebildet sein. Durch eine Differenz zwischen der Bewegungsgeschwindigkeit der Transporteinheiten und dem Zahnprofil wird eine Drehbewegung des Ritzels und damit der Aufnahme sowie des daran gehaltenen Vorformlings vermittelt.

Gemäß einer besonders bevorzugten Ausgestaltung erstreckt sich die Zwangsführungsvorrichtung vollständig umlaufend entlang der Transportvorrichtung - d. h. auch entlang des Bereichs zwischen dem Ausgabebereich in dem Eingabebereich, in dem an der Halterung jeweils keine Vorformlinge geführt sind. Dadurch kann sichergestellt werden, dass die Transporteinheiten beim Eintritt in den Eingabebereich die korrekte Orientierung (Phasenlage) aufweisen. Einrichtungen um eine fehlerhafte Positionierung zu korrigieren können damit eingespart werden. Unter einer korrekten Orientierung ist insbesondere zu verstehen, wenn die tatsächliche absolute Orientierung des Vorformlings zu den Werkzeugen bzw. relative Orientierung des Heizprofils zu dem Vorformling gegenüber einer vorgesehenen (absoluten bzw. relativen) Orientierung um einen Winkel von nicht mehr als +/- 5°, insbesondere nicht mehr als +/- 1,5° verdreht ist.

Gemäß einer bevorzugten Ausgestaltung weist die Führung eine Schiene mit einer Führungsnut auf. Die Führungsnut ist für den Eingriff des Mitnehmers ausgebildet und insbesondere in der Funktionsebene angeordnet. Besonders bevorzugt ist die Schiene in der Funktionsebene quer zur Transportrichtung verlagerbar ausgebildet. Durch eine derartige Verlagerung verändert sich die relative Position des Mitnehmers im Verhältnis zur Rotationsachse, wenn der Mitnehmer und die Nut miteinander im Eingriff stehen. Dadurch kann eine veränderte Drehstellung der Halterung erzwungen werden. Sind in diesem Bereich Heizeinrichtungen auf den an der Halterung aufgenommenen Vorformling wirksam, wird ein hinsichtlich der rotativen Orientierung abweichendes Temperaturprofil aufgeprägt.

Alternativ oder zusätzlich weist die Führung vorzugsweise eine verformbare Schiene auf. Dabei wird die Schiene insbesondere in der Funktionsebene derart verformt, dass ein durch sie gebildeter Führungskanal für den Mitnehmer verlagert wird. Dies führt ebenfalls zu einer veränderten Ausrichtung des Vorformlings, wenn der Mitnehmer den verformten Schienenabschnitt durchläuft. Gegenüber einer starren Schiene ergibt sich der Vorteil, dass der Führungskanal - und damit die Trajektorie des Mitnehmers - einen gleichmäßig geschwungenen Verlauf ohne abrupte Richtungsänderungen einnimmt. Hierdurch werden abrupte Drehungen und damit verbundene mechanische Schläge und Vibrationen vermieden.

Bevorzugt ist die verformbare Schiene durch zwei beidseits des Führungskanals angeordnete plastisch deformierbare - insbesondere metallische - Träger ausgebildet. Diese können bevorzugt an ihrer dem Führungskanal zugewandten Innenseite mit einer Auflage versehen sein. Die Auflage ist bevorzugt aus einem verschleiß- und reibungsarmen Kunststoff wie Silikon oder PTFE gebildet. Ganz besonders bevorzugt kann die Auflage im Verschleißfall ausgewechselt werden.

Gemäß einer besonders bevorzugten Ausgestaltung sind die beiden Träger miteinander verbunden, um eine gleichmäßige Breite des Führungskanals zu gewährleisten.

Eine weitere bevorzugt vorgesehene Variante der verstellbaren Führung sieht alternativ oder zusätzlich vor, dass diese eine Mehrzahl an gelenkig miteinander verbundenen Schienengliedern aufweist. Die Schienenglieder sind untereinander paarweise um in der Vertikalrichtung verlaufende Kippachsen miteinander schwenkbeweglich verbunden. Die Ausführungsform mit den Schienengliedern vereint die Vorteile einer verformbaren Schiene mit der verschleißarmen und relativ mechanisch simplen Variante einer einzelnen starren Schiene.

Die einzelnen Schienenglieder weisen jeweils eine kurze Führungsnut auf, innerhalb derer der Mitnehmer linear geführt ist. Durch die jeweilige Ausrichtung der Schienenglieder kann eine Verlagerung quer zur Transportrichtung bewerkstelligt werden. Die Verbindung der einzelnen Schienenglieder ist vorzugsweise so ausgebildet, dass diese einen Längenausgleich zulassen.

Im Rahmen der Erfindung ist es auch möglich, dass mehrere Varianten der verstellbaren und/oder verlagerbaren Führung insbesondere an einer einzigen Heizstrecke miteinander kombiniert werden. Es ist beispielsweise denkbar durch eine verformbare Schiene oder eine Kette aus mehreren Schienengliedern die Einführung oder Ausleitung in eine verlagerbaren starre Schiene zu ermöglichen. Die Schienenglieder können auch einen Träger für eine durchgehende flexible Kunststoffführung bilden.

Gemäß einer bevorzugten Ausgestaltung ist die Führung durch einen Stellantrieb, insbesondere einen Spindeltrieb verstellbar und/oder verlagerbar ausgebildet. Ein Spindeltrieb bezeichnet dabei eine Konstruktion, welche durch ein oder mehrere Paarungen aus einem in ein Innengewinde eingreifenden Außengewinde eine Umsetzung von einer Drehbewegung in eine lineare Bewegung leistet. Ein Spindeltrieb ermöglicht eine präzise Einstellung bei gleichzeitiger Selbsthemmung des Einstellungsmechanismus'. Auch sind hydraulische oder pneumatische Stellantriebe sowie Kombinationen unterschiedlicher Antriebe denkbar.

Gemäß einer bevorzugten Ausgestaltung ist der Stellantrieb manuell betätigbar. Dabei kann z. B. ein Spindeltrieb von einem Bediener durch ein Bedienelement, z. B. ein Einstellrad verdreht werden, um die Position und/oder Form der Führung an ein oder mehreren Position (in Transportrichtung hintereinander) zu verändern.

Auch kann es im Rahmen der Erfindung alternativ oder zusätzlich vorgesehen sein, dass der Stellantrieb motorisch, insbesondere elektromotorisch bzw. servomotorisch betätigbar ist. Ein solcher als Aktuator ausgebildeter Stellantrieb ermöglicht die automatische bzw. automatisierte Einstellung der Orientierung in dem Heizbereich.

Besonders bevorzugt ist der Motor, insbesondere Servomotor, mit einer Steuerung gekoppelt. Die Steuerung ist bevorzugt dazu eingerichtet, die Orientierung des Heizprofils anzupassen bzw. zu korrigieren oder optimieren. Dazu ist die Steuerung besonders bevorzugt mit zumindest einer Sensoreinheit gekoppelt. Dabei kann es sich insbesondere um eine Einheit zur Erfassung der Drehstellung des erwärmten Vorformlings und/oder dessen Temperaturprofils handeln. Beispielsweise kann die Sensoreinheit eine optische Erfassungseinheit - insbesondere im sichtbaren Lichtspektrum oder im Infrarotbereich - und besonders bevorzugt in Verbindung mit einer Bilderkennung handeln. Auch kann eine Sensoreinheit zur Bestimmung von Wandstärken - insbesondere bei einem nachfolgend aus dem erwärmten Vorformling hergestellten Behälter - handeln.

Damit im Rahmen der vorliegenden Erfindung insbesondere Orientierungsfehler infolge der Übergabe aus der Heizeinrichtung und/oder einer späteren Handhabungseinheit ausgeglichen werden können, ist zumindest eine Sensoreinheit besonders bevorzugt an einer der Heizeinrichtung nachfolgenden Prozessstufe - insbesondere an, vor oder unmittelbar nach einer Umformungsmaschine angeordnet. Besonders bevorzugt ist die Sensoreinheit derart angeordnet, dass ein Orientierungsfehler vor der Umformung detektiert werden kann. Ein betroffener Vorformling würde dann zweckmäßigerweise gar nicht erst umgeformt werden. Dies spart Energie und der Vorformling kann ggf. wiederverwendet werden.

Gemäß einem besonders bevorzugten Aspekt der Erfindung ist die Vorrichtung generell dazu eingerichtet, eine Eigenschaft des erwärmten Vorformlings und/oder eines anschließend aus dem Vorformling erzeugten Kunststoffbehälters zu erfassen bzw. zu messen und aufgrund dessen die Führung zu verlagern und/oder zu verstellen.

Gegenstand Erfindung ist auch ein Verfahren zur Handhabung von Vorformlingen. Das Verfahren wird bevorzugt in einer zuvor beschriebenen erfindungsgemäßen Vorrichtung durchgeführt.

Dabei wird ein Vorformling an einer um eine Drehachse drehbaren Halterung einer umlaufend bewegbaren Transporteinheit von einem Eingabebereich zu einem Ausgabebereich einer Heizanordnung entlang zumindest einer Heizstrecke transportiert und dabei erwärmt. Die Transporteinheit weist einen zu der Drehachse exzentrisch angeordneten Mitnehmer auf, welcher mit der Halterung drehgekoppelt ist und in dem Heizbereich mit einer Führung wechselwirkt. Durch die relative Positionierung zwischen der Führung und der Transporteinheit bzw. der Drehachse kann die Drehstellung der Halterung - und damit des Vorformlings - festgelegt werden. Nachfolgend wird der Vorformling aus dem Ausgabebereich der Heizanordnung ausgegeben.

Erfindungsgemäß wird die Führung verstellt und/oder verlagert, um die Orientierung des Vorformlings entlang der Heizstrecke einzustellen. Da die Beheizung entlang der Heizstrecke eine Richtungscharakteristik aufweist, kann durch die Beeinflussung der Orientierung die Verteilung der in den Vorformling eingebrachten Wärmemenge gesteuert werden. Somit lässt sich durch die Verlagerung und/oder Verstellung der Führung die Temperaturverteilung - das sogenannte Heizprofil - des Vorformlings gezielt beeinflussen.

Gemäß einer bevorzugten Ausgestaltung wird der erwärmte Vorformling anschließend in einer Umformmaschine zu einem Kunststoffbehälter umgeformt. Der Kunststoffbehälter weist dabei besonders bevorzugt einen nicht-runden Querschnitt auf. Im Rahmen der vorliegenden Erfindung ist es möglich, die gezielt gerichtete Beheizung des Vorformlings (Preferential Heating) exakt auf die Ausrichtung des Vorformlings in der Umformmaschine abzustimmen. Dadurch können die Vorteile des Preferential Heating besonders gut genutzt werden.

Besonders bevorzugt wird zumindest eine Eigenschaft des erwärmten Vorformlings und/oder des Kunststoffbehälters gemessen und aufgrund dessen die Führung verlagert und/oder verstellt. Ziel der Erfindung ist es insbesondere, Fehlpositionierungen zu vermeiden bzw. zu korrigieren. Dadurch kann die Eigenschaft des erwärmten Vorformlings bzw. des späteren Kunststoffbehälters optimiert und infolgedessen die Produktqualität verbessert werden.

Gemäß einer bevorzugten Ausgestaltung ist eine ermittelte Eigenschaft ein Temperaturprofil. Insbesondere das Temperaturprofil des erwärmten Vorformlings ist eine unmittelbare Folge des Heizvorgangs in der Heizanordnung. Durch die erfindungsgemäße Verstellung der Drehstellung entlang der Heizstrecke kann darauf direkt Einfluss genommen werden. Zur Erfassung des Temperaturprofils wird bevorzugt ein Infrarot-Thermometer und/oder eine Infrarot-Kamera verwendet. Das Temperaturprofil meint dabei insbesondere die Verteilung der Temperatur des erwärmten Vorformlings in Umfangsrichtung um die Längserstreckungsachse. Zusätzlich kann auch ein longitudinales Temperaturprofil entlang der Längserstreckungsachse erfasst werden.

Alternativ oder zusätzlich kann eine erfasste Eigenschaft ein Wandstärkenprofil sein. Das Wandstärkenprofil wird dabei besonders bevorzugt beim Kunststoffbehälter - d. h. bei dem bereits umgeformten Vorformling - erfasst. Das Wandstärkenprofil meint dabei insbesondere die Verteilung der Wandstärke des Kunststoffbehälters in Umfangsrichtung um die Längserstreckungsachse. Diese wird insbesondere in einem mittleren Bereich erfasst, welcher zuvor umgeformt wurde. Die Wandstärkenverteilung ergibt sich aus dem Zusammenwirken des Preferential Heatings mit der Formgebung der Außenform beim Umformen sowie deren korrekte Ausrichtung zueinander.

Ganz besonders bevorzugt wird zumindest eine Eigenschaft, vorzugsweise sämtliche Eigenschaften erst nach der Ausgabe aus der Heizeinrichtung ermittelt - d.h. wenn der Vorformling nicht mehr an einer Transporteinheit der Transportvorrichtung geführt wird. Die vorliegende Erfindung dient insbesondere dazu, Effekte und Fehlpositionierungen beim Transport und der Übergabe nach der Transportvorrichtung auszugleichen. Daher ist es zweckmäßig, die Eigenschaft nicht innerhalb der Heizanordnung, sondern erst bei einem nachfolgenden Verarbeitungsschritt - z. B. unmittelbar vor, während oder nach einer Umformung - zu erfassen.

Zweckmäßigerweise wird zumindest eine Eigenschaft im laufenden Prozess gemessen. Das hat den Vorteil, dass kontinuierlich und verzögerungsfrei Messwerte anfallen, welche für die weitere Einstellung der Führung genutzt werden können. Außerdem werden die so ermittelten Werte nicht durch eine Entnahme, Transport und gegebenenfalls Zeitverzögerungen verfälscht. Derartige Inline-Messungen können z. B. mit Infrarotkameras, ultraschallbasierten Wandstärken-Messgeräten oder optischen Messgeräten, wie einer Laser-Interferenz-gestützten Wandstärkemessung durchgeführt werden.

Alternativ oder zusätzlich werden einzelne Vorformlinge und/oder Kunststoffbehälter aus dem Verfahren ausgeschleust und anschließend vermessen. Bei einer derartigen Offline-Messung kann üblicherweise eine höhere Messgenauigkeit erlangt werden - zumindest was die geometrischen Abmessungen der Proben angeht.

Besonders bevorzugt werden regelmäßig Inline-Messung durchgeführt und gelegentlich Offline-Messungen zur Kontrolle bzw. Kalibrierung der Inline-Messungen ergänzt. Auch können die Messergebnisse der Inline- und Offline-Messungen anhand eines Datenmodells miteinander fusioniert werden.

Besonders bevorzugt werden Messwerte der Eigenschaften von einer Vielzahl von Vorformlingen und/oder Kunststoffbehältern ermittelt und zumindest eine statistische Größe - insbesondere Maximum, Minimum, Mittelwert Median und/oder Quantitle - abgeleitet. Die Verwendung statistischer Größen ermöglicht die Berücksichtigung zufälliger Streuungen.

Vorzugsweise sind ein oder mehrere Erfassungseinheiten zum Messen zumindest einer Eigenschaft des erwärmten Vorformlings und/oder des Kunststoffbehälters (Sensoreinheit) mit einer Steuereinheit verbunden, welche für die Durchführung statistischer Auswertungen und/oder Berechnung eingerichtet ist. Die Steuereinheit ist vorzugsweise ebenfalls dazu eingerichtet, eine Verlagerung und/oder Verstellung der Führung servomotorisch anzusteuern. In Verbindung mit Inline-Messungen zumindest einer Eigenschaft kann dadurch eine geschlossene Regelschleife zur Optimierung implementiert werden. Besonders bevorzugt verwendet die Steuereinheit selbstlernende Algorithmen zum sogenannten maschinellen Lernen. Bei dieser kann durch Variation mehrerer Parameter - von denen einer die Positionierung und/oder Verstellung der Führung ist - die Formgebung des Kunststoffbehälters optimiert werden.

Die Steuerung kann so eingerichtet sein, dass sie die Verstellung der Führung unmittelbar durchführt. Es ist jedoch alternativ auch denkbar, dass eine Verstellung zunächst vorgeschlagen wird, welche durch einen menschlichen Benutzer nachfolgend bestätigt und/oder händisch ausgeführt werden muss.

Die Erfindung wird nachfolgend anhand von lediglich Ausführungsbeispiele darstellenden Figuren erläutert. Es zeigen dabei schematisch:
- Fig. 1: eine schematische Draufsicht auf eine erfindungsgemäße Vorrichtung,
- Fig. 2: eine Schnittdarstellung eines Vorformlings,
- Fig. 3: eine perspektivische Darstellung einer Transporteinheit und
- Fig. 4A bis 4C: verschiedene Varianten einer verstellbaren und/oder verlagerbaren Führung.

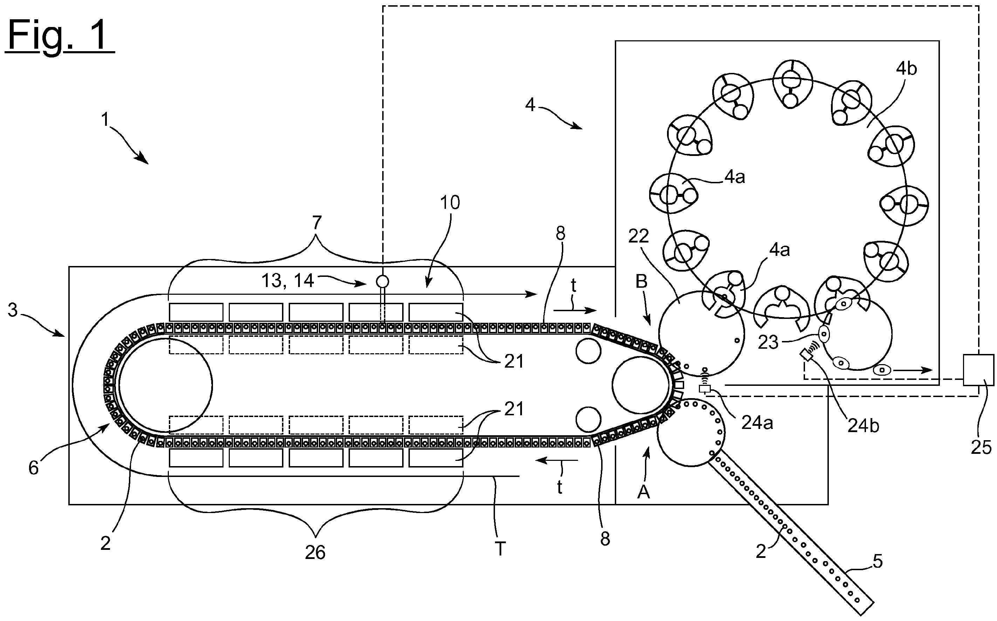

Die Fig. 1 zeigt schematisch den generellen Aufbau einer erfindungsgemäßen Vorrichtung 1 zur Behandlung von Vorformlingen 2 mit einer Heizanordnung 3 und einer Umformmaschine 4. Die Vorformlinge 2 werden mit einer Vorformlingzuführung 5 der Heizanordnung 3 zugeführt. Diese ist dazu eingerichtet, einen fortlaufenden Strom an Vorformlingen 2 zu erwärmen und anschließend auszugeben und der Umformmaschine 4 zuzuführen.

Die Heizanordnung 3 weist eine Transportvorrichtung 6 auf, welche dazu eingerichtet ist, die Vorformlinge 2 von einem Eingabebereich A zu einem Ausgabebereich B entlang eines zumindest eine Heizstrecke 7 aufweisenden Transportwegs T zu transportieren. Die Bewegungsrichtung von dem Eingabebereich A zu dem Ausgabebereich B wird dabei auch als Transportrichtung t bezeichnet.

Die Transportvorrichtung 6 weist eine Vielzahl von in der Transportrichtung t umlaufend bewegbaren Transporteinheiten 8 auf, welche dazu eingerichtet sind, jeweils einen einzelnen Vorformling 2 entlang des Transportwegs T zu bewegen. Die Gesamtheit der Transporteinheit 8 bildet dabei eine endlos umlaufende Kette.

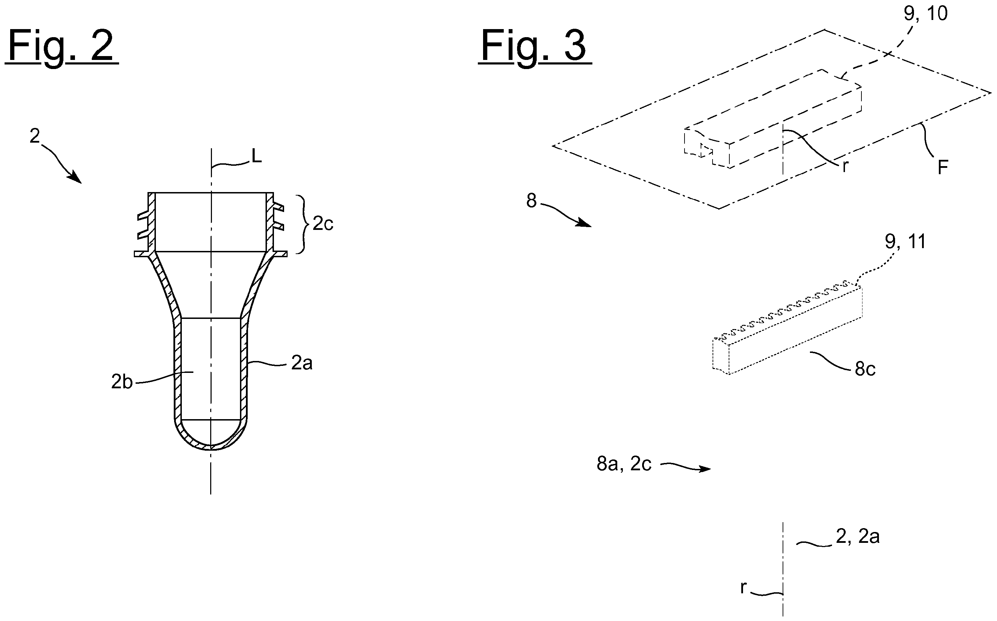

Der allgemeine Aufbau der Vorformlinge 2 wird in der Fig. 2 erläutert: Diese sind um eine Längserstreckungsachse L im Wesentlichen symmetrisch ausgebildet. Dabei umschließt eine Wandung 2a einen Innenraum 2b. Dieser ist über einen Halsabschnitt 2c von außen zugänglich. Dabei kann insbesondere der Halsabschnitt 2c von einer Symmetrie um die Längserstreckungsachse L abweichen. Im Ausführungsbeispiel ist der Halsabschnitt 2c mit einem Schraubgewinde für eine spätere Verwendung als Flaschenöffnung ausgestaltet.

Die Fig. 3 zeigt beispielhaft den Aufbau einer Transporteinheit 8: Diese umfasst eine um eine Rotationsachse r drehbare Halterung 8a zur Aufnahme eines Vorformlings 2. Dazu umfasst die Halterung 8a einen in den Halsabschnitt 2c des Vorformlings 2 eintauchenden Dorn, welcher kraft- und/oder reibschlüssig an dessen Innenseite abgestützt ist. In der dargestellten aufgesteckten Position fluchtet die Rotationsachse r mit der Längserstreckungsachse L des Vorformlings 2. Eine Drehbewegung des Halters 8a wird daher unmittelbar in eine Rotationsbewegung des Vorformlings 2 umgesetzt. Zusätzlich weist die Transporteinheit 8 einen in einer Funktionsebene F zu der Rotationssachse r exzentrisch angeordneten und mit der Halterung 8a drehgekoppelten Mitnehmer 8b auf.

Entlang des Transportwegs T ist zumindest abschnittsweise eine Zwangsführungsvorrichtung 9 ausgebildet, welche dazu eingerichtet ist, mit den Transporteinheiten 8 zu wechselwirken und dadurch die Drehstellung um die Rotationsachse r der Halterung 8a festzulegen. Die Zwangsführungsvorrichtung 9 kann dabei in unterschiedlichen Weisen mit der Transporteinheit 8 in Kontakt treten. Zum einen ist es möglich, dass der Mitnehmer 8b mit einer Führung 10 im Eingriff steht. Dadurch wird die Drehstellung der Halterung 8a im nichtrotativen Betrieb festgelegt. Diese erste Altenative ist in der Fig. 3 gestrichelt dargestellt.

Alternativ kann auch die Zwangsführungsvorrichtung 9 ein Zahnprofil 11 aufweisen, welches mit einem Ritzel 8c kämmt, dass mit der Halterung 8a drehgekoppelt ist. Diese alternative Ausführungsform ist in der Fig. 3 gepunktet angedeutet. Zweckmäßigerweise ist das Ritzel 8c außerhalb der Funktionsebene F des Mitnehmers 8b angeordnet.

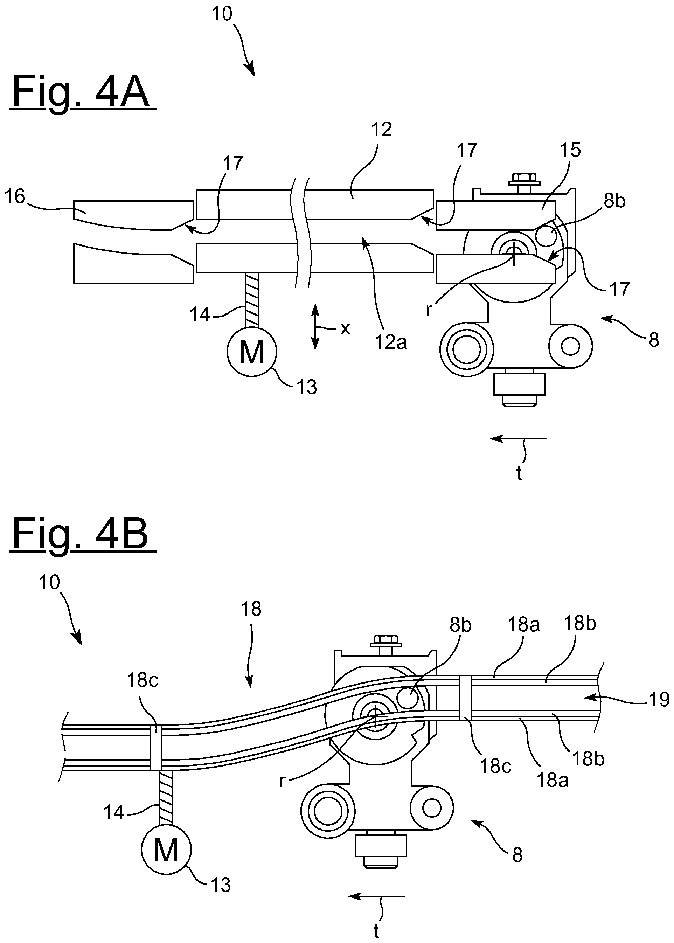

Im Rahmen der Erfindung ist vorgesehen, dass entlang zumindest eines Abschnitts der Heizstrecke 7 die Zwangsführungsvorrichtung 9 einen in der Funktionsebene F angeordnete und mit dem Mitnehmer 8b wechselwirkende Führung 10 aufweist, welche zumindest abschnittsweise verstellbar und oder verlagerbar ist. Nachfolgend werden in den Figuren 4A bis 4C drei mögliche Varianten dargestellt, die eine derartige Einstellung in der Funktionsebene realisiert werden kann:
Gemäß dem ersten in Fig. 4A dargestellten Ausführungsbeispiel weist die Führung 10 eine Schiene 12 mit einer Führungsnut 12a auf. Diese ist im Ausführungsbeispiel innerhalb der Funktionsebene F in einer Querrichtung x senkrecht zur Transportrichtung t verlagerbar. Die Schiene 12 wird beim Einstellen in ihrer Form nicht verändert, sondern nur relativ zu der Transportvorrichtung 6 bewegt. Hierzu ist ein durch einen Servomotor 13 bewegbarer Spindeltrieb 14 mit der Schiene gekoppelt. In der Transportrichtung t vor der Schiene 12 ist ein Einführstück 15 und in Transportrichtung dahinter ein Ausleitungsstück 16 ausgebildet. Sowohl die Schiene 12 als auch das Einführstück 15 und das Ausleitungsstück 16 sind jeweils mit Einführschrägen 17 ausgebildet, um eine durchgängige Zwangsführung des Mitnehmers 8b gewährleisten zu können. Die Führungsnut des Ausleitungsstücks 16 ist am Ende gebogen, um durch die Trajektorie des Mitnehmers 8b eine rotative Bewegung des Halters 8a einzuleiten.

Alternativ oder zusätzlich kann die Führung 10 gemäß der in Fig. 4B dargestellten Variante eine verformbare Schiene 18 aufweisen. Diese umfasst einen verformbaren metallischen Träger 18a beidseits eines Führungskanals 19 für den Mitnehmer 8b. Der Führungskanal 19 ist innenseitig mit einer austauschbaren Auflage 18b aus reibungsarmem Kunststoff ausgekleidet. Zur Beibehaltung der Breite des Führungskanals 19 sind die metallischen Träger 18a überdies über Stege 18c miteinander verbunden. Im Bereich eines solchen Stegs 18c ist der Krafteinleitungspunkt für den Spindeltrieb 14 zur servomotorischen Verlagerung der Führung 10 angebracht.

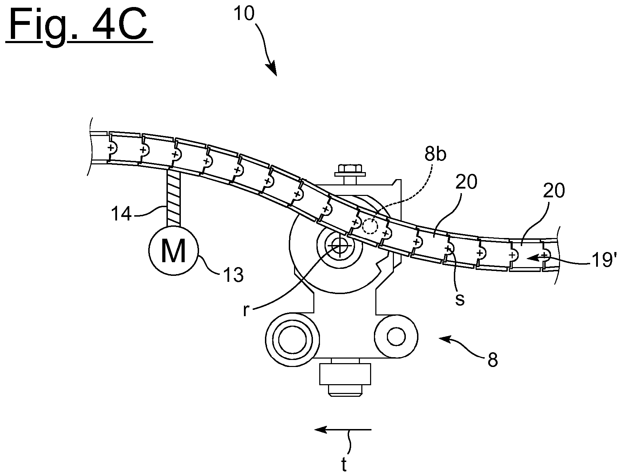

Gemäß der in Fig. 4C dargestellten weiteren Option umfasst die Führung 10 eine Mehrzahl an gelenkig miteinander verbundenen Schienengliedern 20. Diese sind untereinander paarweise um Kippachsen s miteinander schwenkbeweglich verbunden, welche senkrecht zu der Funktionsebene F (d.h. in Vertikalrichtung) verlaufen. Die Schienenglieder 20 bilden dabei einen abschnittsweise geradlinigen Führungskanal 19' für den Mitnehmer 8b der Transporteinheit 8. Die Verlagerung in der Funktionsebene erfolgt dabei ebenfalls über einen von einem Servomotor 13 angetriebenen Spindeltrieb 14.

Im Rahmen des erfindungsgemäßen Verfahrens wird ein Vorformling 2 an der drehbaren Halterung 8a der umlaufend bewegbaren Transporteinheit 8 von dem Eingabebereich A zu dem Ausgabebereich B transportiert. Dabei durchläuft er zumindest eine Heizstrecke 7 der Heizanordnung 3, innerhalb derer beidseits des Transportweges T Heizelemente 21 angeordnet sind. Dabei kann es sich insbesondere um beidseitig angeordnete Heizstrahler - insbesondere in Preferential Heating-Abschnitten - oder gegenüberliegende Paare aus Heizstrahlern und Reflektoren - vorzugsweise bei einer gleichmäßigen rotativen Erwärmung - handeln. Durch die quer zur Transportrichtung t auf den Vorformling 2 abgestrahlte Wärmeenergie wird dieser dabei erwärmt.

In dem Heizbereich 7 wechselwirkt der Mitnehmer 8b mit der erfindungsgemäß verstellbaren und/oder verlagerbaren Führung 10. Anschließend wird der erwärmte Vorformling 2 in dem Ausgabebereich B von einem Ausgaberad 22 ausgegeben und unmittelbar einer nicht-runden Außenform 4a der Umformmaschine 4 zugeführt. In dem Ausführungsbeispiel ist eine Vielzahl von Außenformen 4a umlaufend am Umfang eines sogenannten Blasrades 4b angeordnet. Anschließend wird der Vorformling in der Umformmaschine 4 zu einem Kunststoffbehälter 23 umgeformt.

In der dargestellten Ausführungsform wird sowohl von einer ersten Sensoreinheit 24a eine Eigenschaft des erwärmten Vorformlings 2, nämlich ein umlaufendes Temperaturprofil als auch nach dem Blasformprozess durch eine zweite Sensoreinheit 24b eine Eigenschaft des fertigen Kunststoffbehälters 23 gemessen, nämlich eine Wandstärkenverteilung. Diese Messwerte werden einer Steuerungseinheit 25 zugeleitet, welche aufgrund dessen den Servomotor 13 ansteuert, um die Führung 10 erfindungsgemäß zu verlagern und/oder zu verstellen.

Die Heizanordnung 3 weist weiterhin eine weitere Heizstrecke 26 auf, innerhalb derer eine rotativ wirksame Zwangsführungsvorrichtung 9 mit einem Zahnprofil 11 in das Ritzel 8c eingreift. Diese ist in Transportrichtung t vor der Heizstrecke 7 mit erfindungsgemäß verstellbarer Führung 10 angeordnet. Somit wird zunächst eine gleichmäßige Beheizung durchgeführt, bevor im Bereich der Heizstrecke 7 ein verstellbares Preferential Heating stattfindet.

### Bezugszeichenliste

- 1: Vorrichtung
- 2: Vorfomling
- 2a: Wandung
- 2b: Innenraum
- 2c: Halsabschnitt
- 3: Heizanordnung
- 4: Umformmaschine
- 4a: Außenformen
- 4b: Blasrad
- 5: Vorformlingzuführung
- 6: Transportvorrichtung
- 7: Heizstrecke
- 8: Transporteinheit
- 8a: Halterung
- 8b: Mitnehmer
- 8c: Ritzel
- 9: Zwangsführungsvorrichtung
- 10: Führung
- 11: Zahnprofil
- 12: Schiene
- 12a: Führungsnut
- 13: Servomotor
- 14: Spindeltrieb
- 15: Einführstück
- 16: Ausleitungsstück
- 17: Einführschrägen
- 18: verformbare Schiene
- 18a: Träger
- 18b: Auflage
- 18c: Steg
- 19': Führungskanal
- 20: Schienenglieder
- 21: Heizelement
- 22: Ausgaberad
- 23: Kunststoffbehälter
- 24a,b: Sensoreinheit
- 25: Steuerungseinheit
- 26: weitere Heizstrecke
- A: Eingabebereich
- B: Ausgabebereich
- T: Transportweg
- t: Transportrichtung
- L: Längserstreckungsachse
- r: Rotationsachse
- F: Funktionsebene
- x: Querrichtung
- s: Kippachse

## Patentansprüche

1. Vorrichtung (1) zur Behandlung von Vorformlingen (2) umfassend eine Heizanordnung (3) mit einer Transportvorrichtung (6) zum Transportieren der Vorformlinge (2) von einem Eingabebereich (A) zu einem Ausgabebereich (B) entlang eines zumindest eine Heizstrecke (7) aufweisenden Transportwegs (T), mit einer Vielzahl von in einer Transportrichtung (t) umlaufend bewegbaren Transporteinheiten (8), welche jeweils eine um eine Rotationsachse (r) drehbare Halterung (8a) zur Aufnahme jeweils eines Vorformlings (2) und in einer Funktionsebene (F) einen zu der Rotationssachse (r) exzentrisch angeordneten und mit der Halterung (8a) drehgekoppelten Mitnehmer (8b) aufweisen, mit zumindest einer entlang des Transportwegs (T) ausgebildeten Zwangsführungsvorrichtung (9), welche dazu eingerichtet ist mit den Transporteinheiten (8) zu wechselwirken und dadurch jeweils die Drehstellung der Halterung (8a) festzulegen, wobei die Zwangsführungsvorrichtung (9) entlang zumindest eines Abschnitts der Heizstrecke (7) eine in der Funktionsebene (F) angeordnete und mit dem Mitnehmer (8b) wechselwirkende Führung (10) aufweist, **dadurch gekennzeichnet, dass** die Führung (10) zumindest abschnittsweise verstellbar und/oder verlagerbar ausgebildet ist.

2. Vorrichtung (1) nach dem vorangegangenen Anspruch, **gekennzeichnet durch** eine an den Ausgabebereich (B) angeschlossene Umformmaschine (4), insbesondere Streckblasmaschine.

3. Vorrichtung (1) nach dem vorangegangenen Anspruch, **dadurch gekennzeichnet, dass** die Umformmaschine (4) eine Vielzahl von im Querschnitt nicht-runden Außenformen (4a) aufweist.

4. Vorrichtung (1) nach einem der vorangegangenen Ansprüche, **dadurch gekennzeichnet, dass** sich die Zwangsführungsvorrichtung (9) durchgängig von der verstellbaren und/oder verlagerbaren Führung (10) bis zu dem Ausgabebereich (B) erstreckt.

5. Vorrichtung (1) nach dem vorangegangenen Anspruch, **dadurch gekennzeichnet, dass** sich die Zwangsführungsvorrichtung (9) durchgängig zwischen dem Eingabebereich (A) und dem Ausgabebereich (B) erstreckt.

6. Vorrichtung (1) nach dem vorangegangenen Anspruch, **dadurch gekennzeichnet, dass** sich die Zwangsführungsvorrichtung (9) vollständig umlaufend entlang der Transportvorrichtung (6) erstreckt.

7. Vorrichtung (1) nach einem der vorangegangenen Ansprüche, **dadurch gekennzeichnet, dass** die Führung (10) eine Schiene (12) mit einer Führungsnut (12a) aufweist, welche insbesondere in der Funktionsebene (F) quer zu der Transportrichtung (t) verlagerbar ist.

8. Vorrichtung (1) nach einem der vorangegangenen Ansprüche, **dadurch gekennzeichnet, dass** die Führung (10) eine verformbare Schiene (18) aufweist.

9. Vorrichtung (1) nach einem der vorangegangenen Ansprüche, **dadurch gekennzeichnet, dass** die Führung (10) eine Mehrzahl an gelenkig miteinander verbundenen Schienengliedern (20) aufweist.

10. Vorrichtung (1) nach einem der vorangegangenen Ansprüche, **dadurch gekennzeichnet, dass** die Führung (10) durch einen Stellantrieb, insbesondere einen Spindeltrieb (14) verstellbar und/oder verlagerbar ist.

11. Verfahren zur Behandlung von Vorformlingen (2), insbesondere in einer Vorrichtung (1) nach einem der vorangegangenen Ansprüche, wobei ein Vorformling (2) an einer um eine Drehachse (r) drehbaren Halterung (8a) einer umlaufend bewegbaren Transporteinheit (8) von einem Eingabebereich (A) zu einem Ausgabebereich (B) einer Heizanordnung (3) entlang zumindest einer Heizstrecke (7) transportiert und dabei erwärmt wird, wobei die Transporteinheit (8) einen zu der Drehachse (r) exzentrisch angeordneten Mitnehmer (8b) aufweist, welcher mit der Aufnahme (8a) drehgekoppelt ist und in dem Heizbereich (7) mit einer Führung (10) wechselwirkt, und wobei der erwärmte Vorformling (2) aus dem Ausgabebereich (B) ausgegeben wird, **dadurch gekennzeichnet, dass** die Führung (10) verstellt und/oder verlagert wird, um die Orientierung des Vorformlings (2) entlang der Heizstrecke (7) einzustellen.

12. Verfahren nach dem vorangegangenen Anspruch, **dadurch gekennzeichnet, dass** der erwärmte Vorformling (2) anschließend in einer Umformmaschine (4) zu einem Kunststoffbehälter (23) umgeformt wird.

13. Verfahren nach einem der vorangegangenen Ansprüche 11 oder 12, **dadurch gekennzeichnet, dass** eine Eigenschaft des erwärmten Vorformlings (2) und/oder des Kunststoffbehälters (23) gemessen wird und aufgrund dessen die Führung (10) verlagert und/oder verstellt wird.

14. Verfahren nach dem vorangegangenen Anspruch, **dadurch gekennzeichnet, dass** die Eigenschaft ein Temperaturprofil ist.

15. Verfahren nach einem der vorangegangenen Ansprüche 13 oder 14, **dadurch gekennzeichnet, dass** die Eigenschaft ein Wandstärkenprofil ist.

16. Verfahren nach einem der vorangegangenen Ansprüche 13 bis 15, **dadurch gekennzeichnet, dass** die Eigenschaft erst nach der Ausgabe aus der Heizanordnung (3) ermittelt wird.
